(19) Europäisches Patentamt
European Patent Office
Office européen des brevets

(11) EP 2 898 778 B1

(12) **EUROPEAN PATENT SPECIFICATION**

(45) Date of publication and mention
of the grant of the patent:
**04.07.2018 Bulletin 2018/27**

(51) Int Cl.:
*A23G 9/04* *(2006.01)*     *A23G 9/34* *(2006.01)*
*A23G 9/44* *(2006.01)*

(21) Application number: **14152099.9**

(22) Date of filing: **22.01.2014**

(54) **Frozen beverage**

Gefrorenes Getränk

Boisson surgelée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.07.2015 Bulletin 2015/31**

(73) Proprietors:
• **Unilever PLC
London, Greater London EC4Y 0DY (GB)**
Designated Contracting States:
**CY GB IE MT**
• **UNILEVER NV
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventors:
• **Judge, Phillippa
Sharnbrook, Bedfordshire, MK44 1LQ (GB)**

• **Marinov, George Simeonov
Sharnbrook, Bedfordshire, MK44 1LQ (GB)**
• **Mitchell, John Turner
Sharnbrook, Bedfordshire, MK44 1LQ (GB)**
• **Williamson, Ann-Marie
Sharnbrook, Bedfordshire, MK44 1LQ (GB)**

(74) Representative: **Keenan, Robert Daniel
Unilever PLC
Unilever Patent Group
Colworth House
Sharnbrook
Bedford, Bedfordshire MK44 1LQ (GB)**

(56) References cited:
EP-A1- 1 749 882     EP-A1- 2 625 965
EP-A2- 0 201 974     EP-B1- 1 051 913
WO-A1-97/43913     WO-A1-2006/007924
WO-A1-2010/054829     CN-B- 102 058 124
US-A- 3 826 829     US-A1- 2011 300 264

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 898 778 B1

## Description

The invention relates to a frozen beverage, in particular to a frozen beverage with reduced perceived organoleptic coldness comprising an ice crystal population and an ingredient having a Trouton ratio of at least 75 as measured in a 0.2 wt. % aqueous solution at 20 degrees centigrade, wherein the number average length of the longest dimension of the ice crystal population is 500 to 5000 microns.

US 4 737 372 (Thomas J. Lipton Incorporated) discloses a milk-shake prepared by freezing at least two portions of its constituents under different conditions, such that clearly different ice crystal sizes are generated, and freezing the combined portions to a storing temperature below -15 degrees centigrade. The frozen product is prepared for consumption by partly thawing it, using a controlled amount of microwave energy. The particle size distribution of the ice crystals in the frozen product can be very broad, i.e. considerably broader than in conventional aerated ice-cream products, but can also be such that at least two clearly discernible ranges of particle sizes are present. On thawing the frozen product using a controlled amount of microwave energy, such amount of ice crystals can be molten that the product becomes generally fluid and the remainder of the crystals remain in a non-agglomerated condition dispersed in the fluid.

EP 1 051 913 B1 (Lotte Company Limited) discloses a cold confectionery having a smooth feeling in mouth and a smooth spoonability and also including ice fragments of such a size as to enable a person to sense the ice fragments in eating the cold confectionery, for being enjoyable to both the smooth feeling in mouth and the cold and cool feeling as ice, and a method of preparing the cold confectionery. The cold confectionery has fine ice fragments, wherein a length in a longitudinal axis direction of said ice fragments is not more than 1.0 mm and an average value thereof is in the range of 0.06 mm to 0.6 mm, and at least 80 percent of the ice fragments is in the range of 0.06 mm to 1.0 mm. In a preferred embodiment, a method of preparing a cold confectionery is provided, wherein lumps of ice are mixed with a cold confectionery mix frozen by a freezer to obtain a mixture and subsequently the mixture is then treated by a continuous-type fine pulverizing equipment to form fine ice fragments, wherein a length in a longitudinal axis direction of the ice fragments is not more than 1.0 mm and an average value thereof is in the range of 0.06 mm to 0.6 mm, and at least 80 percent of the ice fragments is in the range of 0.06 mm to 1.0 mm.

US 3 826 829 (General Foods Corporation) discloses a liquid beverage formulation which may be consumed as either a conventional soft drink or as a soft frozen slush beverage containing fine-grained ice crystals. The formulation is formed with water, sugars, polyols, flavour and colour agents, and an effective amount of a stabilising agent which includes pectin in combination with other gums. Example 1 describes a beverage comprising low methoxyl pectin which imparted a lower viscosity to the drink. Other gums include locust bean, guar, tragacanth, karaya, carrageenan, and sodium alginate. Conventional slush beverages need constant mechanical agitation in order to prevent agglomeration of the ice crystals prior to sale. They must be consumed soon after purchase as they quickly revert to a completely liquid form. Any attempt to partially re-freeze melted conventional slush beverages results in a disappointing mass of a few larger agglomerates of ice which forms a separate phase of material atop a heavy, syrupy, liquid phase. A combination of pectin with other gums allowed re-freezing of melted slush beverages forming a creamy, smooth, fine-grained ice crystal structure.

WO 2010/054829 A1 (Cargill Incorporated) describes a method for improving the mouth feel of beverages by adding hydrocolloids having a particular intrinsic viscosity, and reduced calorie beverages comprising said hydrocolloids. The hydrocolloids are characterised in having an intrinsic viscosity of 5 to 500 mL/g as measured by capillary flow viscosimetry. Preferred hydrocolloids include sugar beet pectin, apple pectin and gum Arabic. It is believed that the hydrocolloid acts as a lubricant. Further hydrocolloids which positively modify the body through modifying the viscosity and/or osmolality of the beverage include guar gum, locust bean gum, cassia gum and pectin from, for example, apple, citrus, soy and potato. Preferred embodiments of the invention comprise sugar beet pectin alone or in combination with pectin from other sources such as apple pomace or citrus pulp, guar gum or mixtures thereof. Most preferably the inventive composition comprises apple pectin and citrus pectin.

Related WO 2010/057024 A1 (Cargill Incorporated) describes a method for improving the flavour of beverages by adding hydrocolloids having a particular intrinsic viscosity, the hydrocolloids are characterised in having an intrinsic viscosity of 5 to 500 mL/g as measured by capillary flow viscosimetry. Example hydrocolloids are as disclosed in WO 2010/054829 A1.

Romanchik-Cerpovicz et al (J. of the Am. Dietetic Assoc., 594-597 (2006)) discloses a study which examined the feasibility of substituting okra gum for 25 %, 50 %, 75 % or 100 % milk fat in a frozen chocolate dairy dessert. Consumers rated colour, smell, texture, flavour, aftertaste and overall acceptability. The study showed that okra gum is a suitable milk-fat ingredient substitute for up to 75 % milk fat in chocolate frozen dairy dessert.

CN 10 205 8124 A (Pengxiang Li) describes a beverage comprising okra juice and passion flower juice. The beverage has the advantage of having a comfortable taste and light colour. The passion flower juice is added to the beverage to adjust the coldness of the okra.

CN 10 230 06578 A (Xiong Wang) describes a beverage for enhancing body immunity and promotiong male sexual function, the beverage comprising okra, water melon, carrot, hawthorn, medlar, celery, apple, leek, tomato and honey.

JP 2008 099 656 A (Kuzuu Miki) describes a drink for treating atopic dermatitis, obesity and diabetes, th drink comprising mucin. The mucin is obtained from okra, taro, yam, lotus root and Basella Alba (Malabar spinach).

The inventors have observed that a frozen beverage can be prepared with improved organoleptic properties by mixing an ingredient with a high Trouton ratio into a frozen beverage. The resulting product is the frozen beverage according to the invention which shows improved organoleptic properties such as reduced coldness, a property which is important with flowable ice containing products to prevent negative experiences such as "brain freeze" or headache.

Without wishing to be bound by theory, the inventors believe that the improvement in organoleptic qualities imparted by the frozen beverage according to the invention is due to the role of polymer and/or network structures in extracting heat from the oral cavity during consumption.

Thus in a first aspect of the invention, a frozen beverage is provided, the frozen beverage comprising:

(a) 35 to 90, preferably 50-90 % w/w water;
(b) 5 to 45, preferably 10 to 30 % w/w freezing point depressant;
(c) 5 to 50, preferably 25 to 40 % w/w a first ice crystal population;
(d) 0.001 to 10, preferably 0.01 to 5, most preferably 0.01 to 3 % w/w an ingredient having a Trouton ratio of at least 75, preferably at least 200, most preferably at least 500, as measured in a 0.2 wt. % aqueous solution at 20 degrees centigrade;

wherein the number average length of the longest dimension of the first ice crystal population is 500 to 5000, preferably 500 to 3500, most preferably 500 to 3000 $\mu$m; and

wherein the extensional viscosity of a degassed melt of the frozen beverage is at least 12, more preferably at least 20 Pa.s higher at 20 degrees centigrade than a degassed melt of an identical frozen beverage but without technical feature (d).

Each ice crystal population, ie the first, a second, etc, has a monomodal size distribution.

The Trouton ratio ($T_R$), according to Jones et al (Rheologica Acta, 26, 20-30 (1987)), is defined as the ratio between shear ($\eta$) and extensional viscosity ($\eta_E$) using the following equation, where $\dot{\varepsilon}$ is the strain rate:

$$T_R(\dot{\varepsilon}) = \frac{\eta_E(\dot{\varepsilon})}{\eta(\sqrt{3}\dot{\varepsilon})}$$

A high $T_R$ indicates a material with a high extensional viscosity or "stretchy" rheology. A material with a high extensional viscosity or "stretchy" rheology can also have a lower $T_R$ when the shear viscosity of the material is high. It is the maintenance of this "stretchy" rheology in the frozen beverage of the invention which is believed to be important for the desired sensory benefits.

## BRIEF DESCRIPTION OF THE FIGURES

The invention is exemplified with reference to the figures which show in:

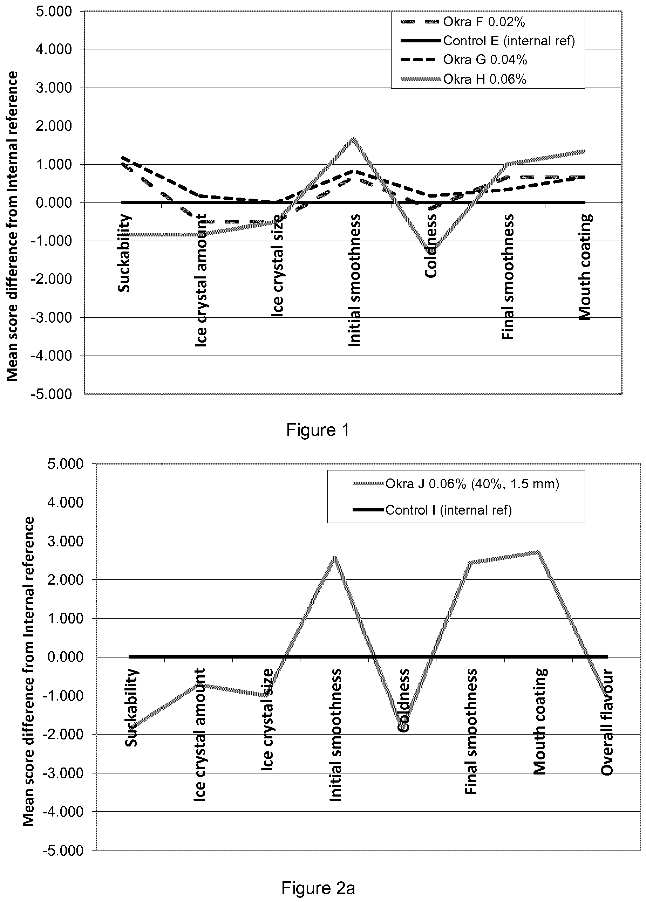

Figure 1    which shows the results of organoleptic testing carried out in accordance with the protocol described in Example 1 on four frozen beverages after overnight storage at -7 degrees centigrade produced on commercial scale equipment wherein the okra pectin is added after a crushing pump stage (n = 6);

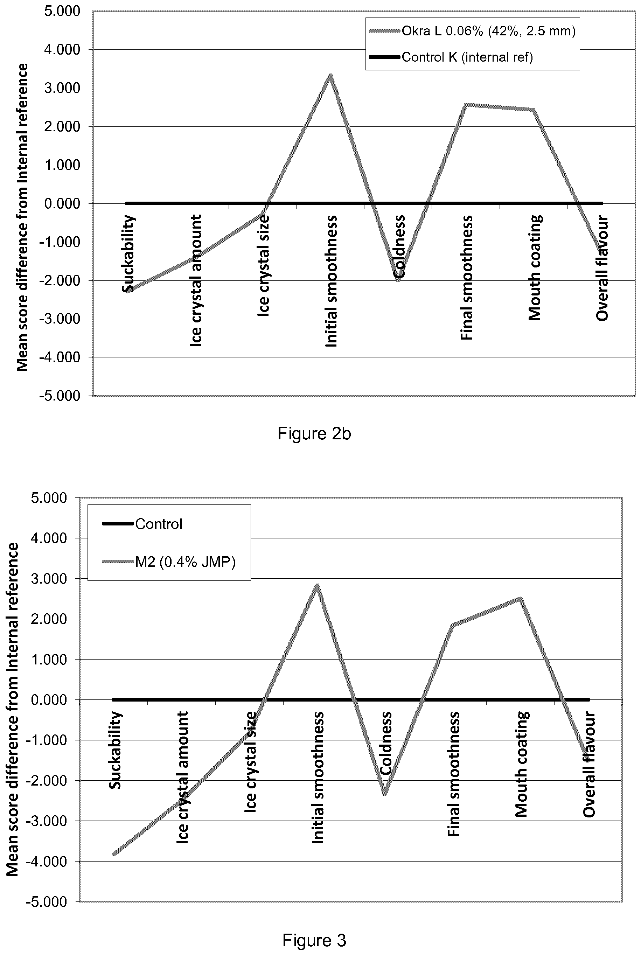

Figure 2    which shows in the results of organoleptic testing carried out in accordance with the protocol described in Example 1 on four frozen beverages after overnight storage at -7 degrees centigrade using a panel of 7 persons with (a) 40 % w/w ice particles (1.5 mm ice particle diameter) and (b) 42 % w/w ice particle (2.5 mm ice particle diameter); and

Figure 3    which shows the results of organoleptic testing carried out in accordance with the protocol described in Example 1 on a frozen beverage after overnight storage at -7 degrees centigrade produced on commercial scale equipment wherein Jew's mallow pectin is added after a crushing pump stage (n = 8).

## DETAILED DESCRIPTION OF THE INVENTION

The invention relates, in a first aspect, to a frozen beverage comprising:

(a) 35 to 90, preferably 50-90 % w/w water;
(b) 5 to 45, preferably 10 to 30 % w/w freezing point depressant;
(c) 5 to 50, preferably 25 to 40 % w/w a first ice crystal population;
(d) 0.001 to 10, preferably 0.01 to 5, most preferably 0.01 to 3 % w/w an ingredient having a Trouton ratio of at least 75, preferably at least 200, most preferably at least 500, as measured in a 0.2 wt. % aqueous solution at 20 degrees centigrade;

wherein the number average length of the longest dimension of the first ice crystal population is 500 to 5000, preferably 500 to 3500, most preferably 500 to 3000 $\mu$m; and

wherein the extensional viscosity of a degassed melt of the frozen beverage is at least 12, more preferably at least 20 Pa.s higher at 20 degrees centigrade than a degassed melt of an identical frozen beverage but without technical feature (d).

The Trouton ratio is measured in accordance with the method described in Example 1. Preferably, the Trouton ratio of the ingredient as measured in a 0.2 wt. % aqueous solution at 20 degrees centigrade does not exceed 2000.

The extensional viscosity of the degassed melt is preferred not to be more than 200 Pa.s higher at 20 degrees centigrade than a degassed melt of an identical frozen beverage but without technical feature (d). The extensional viscosity is measured in accordance with the method described in Example 1.

The freezing point depressant is preferably selected from the group consisting of monosaccharides, disaccharides, starch hydrolysates, maltodextrins, soluble fibre, polyols and mixtures thereof.

The materials used as freezing point depressants often serve not just to reduce the ice content of the frozen beverage at temperatures below the freezing point of water, but also as sweeteners, and as bulk fillers occupying space improving the rheology of the matrix phase. They materials must have a taste and/or flavour which is compatible with the frozen beverage flavour. Examples of suitable

The materials used as freezing point depressants often serve not just to reduce the ice content of the frozen beverage at temperatures below the freezing point of water, but also as sweeteners, and as bulk fillers occupying space improving the rheology of the matrix phase. They materials must have a taste and/or flavour which is compatible with the frozen beverage flavour. Examples of suitable monosaccharides are dextrose, fructose and galactose. Examples of suitable disaccharides include sucrose and lactose. Examples of soluble fibre include inulin, fructooligosaccharide and polydextrose. Example polyols are erythritol, arabitol, xylitol, sorbitol, mannitol, lactitol, maltitol, cellobiitol and glycerol. Different combinations of these materials may be used depending upon the required final product properties including sweetness, calorie content, texture, ice content, etc.

The ingredient having a Trouton ratio of at least 75, preferably at least 200, most preferably at least 500, as measured in a 0.2 wt. % aqueous solution at 20 degrees centigrade is preferably selected from the group consisting of okra pectin, Jews mallow pectin, lime flower pectin, yellow mustard gum, flax seed gum, water-soluble extract of prickly pear cactus (Opuntia ficus-indica), water-soluble extract of Mekabu or any combination thereof and more preferably comprises okra pectin or Jews Mallow pectin or water-soluble extract of prickly pear cactus (Opuntia ficus-indica) or water-soluble extract of Mekabu or a combination thereof.

In one embodiment of the invention, the frozen beverage additionally comprises a second ice crystal population, wherein the number average length of the longest dimension of the ice crystal population is 50 to 150, preferably 60 to 135, most preferably 75 to 125 $\mu$m, and wherein the number average length of the longest dimension of all ice crystal populations is greater than 100 $\mu$m. Thus for two or more ice crystal populations, the number average length of the longest dimension of all ice crystal populations must be greater than 100 $\mu$m. When the frozen beverage comprises only two ice crystal populations, ie when the sum of all the ice crystal populations has a bimodal size distribution, the weight ratio of the first ice crystal population to the second ice crystal population is preferably at least 1:1, preferably 1:1 to 1:5.

In another embodiment, the frozen confection comprises 0 to 0.05, preferably 0 to 0.01, most preferably 0 % w/w fat.

In yet another embodiment of the invention, the frozen confection comprises 0 to 0.05, preferably 0 to 0.01, most preferably 0 % w/w protein.

Typically the frozen confection additionally includes a thickener, preferably selected from the group consisting of xanthan, guar gum, locust bean gum, carrageenan, and pectins having a Trouton ratio below 75, as measured in a 0.2 wt. % solution of said pectin in water as measured at 20 degrees centigrade. The frozen beverage typically additionally comprises a flavouring.

The frozen beverage typically is only mildly aerated, ie has a low over run, for example 10 to 50, preferably 10 to 30 %. Overrun is defined by the equation below and is measured at atmospheric pressure:

$$\% \, over \, run = \frac{(\text{Volume of frozen beverage} - \text{Volume deaerated frozen beverage})}{\text{Volume of deaerated frozen beverage}}$$

The frozen confection preferably has a pH of 2.5 to 8, preferably 3 to 7.5, most preferably 3 to 5.

**Example 1: The Trouton ratios of various compounds/extracts**

Materials

Okra fruit (Abelmoschus esculentrus (L.) Moench)
Jew's mallow (Corchorus olitorius) leaves (Sonac Company, Alexandria, Egypt and The United Company for Food Industry, Egypt)
Lime flowers (Just Ingredients Limited, UK)
Guar gum (Grindsted™ Guar 250, Danisco)
Locust bean gum (Grindsted™ LBG 246)
Tara gum (Solgum D21004/82, Foreign Domestic Chemicals Corporation)
Sodium carboxymethyl cellulose (FMC)
Xanthan gum (CP Kelco)
k-Carrageenan (Danisco A/S)
Flax seed gum (Shaanxi Fuheng (FH) Biotechnology Co. Ltd, China)
Sugar beet pectin (Pectin Betaspec RU 301 (Hernstreith & Fox KG)
Citrus pectin A (degree of esterification ~40 % (GENU pectin LM-18 CG-Z (CP Kelco)))
Citrus pectin B (degree of esterification -35 % (GENU pectin LM-12 CG-Z (CP Kelco)))
Apple pectin powder (Solgar™ Vitamin and Herb, U.K)
OSA starch (octenyl succinic anhydride starch; National Starch)
SSPS (soluble soybean polysaccharides, obtained from SoyFIBE).
HM citrus pectin (high-methoxyl citrus pectin, JM-150, obtained from Kelco Co.)
Gum Arabic (Super Gum EM10, San-Ei Gen FFI Incorporated)
Yellow mustard gum (extracted from yellow mustard bran obtained from G S Dunn)
Prickly pear cactus (Opuntia ficus-indica) (opuntias.co.uk)
Mekabu (flowering sprout of Undaria pinnatifida) (Muso Limited)
Sodium Carboxy M Cellulose (FMC Corporation)
Sodium alginate (Danisco A/S)

A degree of estification below 50 % is considered low, and thus both citrus pectins A and B are considered to be low methoxy (LM) pectins.
Okra pectin was extracted from okra using the following method:

1. The okra was washed, the calyx removed and the remainder chopped roughly.
2. The chopped product was then blended with a double weight amount of 96 % w/w ethanol initially using a handheld blender and then a Silverson homogenizer.
3. The blend was then sieved through a 75 micron sieve and the filtrate discarded.
4. The solids were resuspended in a double weight amount of 96 % w/w ethanol and homogenised twice with a Silverson homogenizer.
5. The suspension was vacuum filtered through Miracloth (22-25 microns) and the filtrate discarded.
6. A suspension of 350 g of solid, 10 g NaCl and boiling water to a total volume of 5 litres was prepared.
7. The suspension was stirred with a paddle stirrer for at least 2 hours at 200 rpm.
8. The suspension was then centrifuged for 55 minutes at 4000 g and the supernatant decanted.
9. Ethanol was then added to the supernatant under hand stirring over 20 minutes to give a final concentration of 45 % w/w ethanol.
10. The mixture was left to stand and precipitate at room temperature for at least 1 hour.
11. The suspension was filtered through 90 micron sieve and the filtrate discarded.
12. The precipitate (okra pectin) was rinsed using 96 % w/w ethanol and freeze dried.

Jew's mallow pectin and lime flower pectin was extracted from their respective leaves using the following method:

1. Blend the whole leaves in 2 times their weight of food-grade ethanol: first with a handheld blender (20-30 secs) then using a Silverson (large screen) for 5-10 minutes.
2. Remove the Jew's Mallow pulp from the ethanol by filtering through Miracloth using a vacuum pump.

3. Re-suspend the pulp using more food-grade ethanol and filter again.

4. Repeat washing in ethanol and filtering twice.

5. Take 350 g of the pulp, add 10 g of NaCl and 350 g boiling water and mix well using a spoon, Make up to 5 L with boiling water.

6. Mix continuously using a paddle stirrer for at least 2 hours.

7. Centrifuge the mixture for 55 minutes at 4000 g using a Sorvall RC-3C centrifuge.

8. Decant the supernatant into 2 x 5 litre beakers and precipitate the pectin by addition of food-grade 96 % ethanol up to approximately 47 % w/w.

9. Filter the mixture to remove the precipitate using a 70-90 $\mu$m sieve.

10. Wash the precipitate using pure ethanol.

11. Dry the precipitate under vacuum in a freeze drier for at least 24 hour.

12. Grind the precipitate to a fine powder using a grinder and store in a cool, dry place until required.

Yellow mustard gum was extracted from yellow mustard bran according to the following method:

1. Mix 1 kg of bran powder well with 2.5-3 times weight (food grade) ethanol and leave for 10-20 minutes.

2. Sieve (90 $\mu$m).

3. Vacuum filter through Miracloth (single layer) discarding the ethanol and retaining the solid.

4. Wash twice with ethanol using vacuum filtration through Miracloth; mixing well between washes in order to remove pigments homogeneously.

5. Take 350 g of wet solid, add 10 g of NaCl, 350 g warm water and mix well.

6. Put under paddle stirrer and add boiling water to 4.8-5 litres total volume. Ensure good mixing and stir gently for at least 2 hours.

7. Centrifuge for 55 minutes at 5000 g and decant supernatant into 2 x 5 litre beakers (discard solid).

8. Add supernatant in 400 ml aliquots to ethanol (90 % of the weight of the supernatant) and hand mix slowly using a gentle, folding action. Mix well and leave to precipitate at room temperature for at least 1 hour with occasional stirring.

9. Sieve (90-250 $\mu$m).

10. Wash precipitate in ethanol.

11. Dry precipitate in freeze drier.

12. Grind precipitate to a fine powder (<1 mm) using a grinder.

Methods

Extensional viscosity was measured using a THERMO Electron Corporation Capillary break-up Extensional Rheometer (CaBER 1). The plate diameters were 6 mm with an initial plate separation of 2 mm and a final plate separation of 8 mm. 50 $\mu$l of sample was loaded between the plates at 20 °C and the plates separated from the initial to the final separation distance over 0.05 seconds. A transient liquid bridge (i.e. a liquid filament) is formed between the two plates, which ultimately breaks up upon separation of the discs. The instrument measures the diameter of the midpoint of the liquid filament formed between the two discs and it tracks its thinning until the break-up point. The method has no means to control the rate at which the filament is thinning (i.e. the strain rate). This rate is determined by the balance of the capillary force, trying to shrink and break the liquid filament, and the opposing viscous force. The latter force is determined by the extensional viscosity which can vary as the contraction rate changes with time. The processing of the raw data and the calculation of the extensional viscosity was done using CaBER Analysis software (v4.50 built 29 November 04, designed by Cambridge Polymer Group, http://www.campoly.com). The CaBER Analysis software has a built-in function to select the usable range of data. It cuts off the data where the filament is too thick and its shrinkage is driven by the gravity and leaves the part where the shrinkage is due to the capillary force only. But, in addition to this, the last data points were removed where, after the break-up occurs, the retraction of the broken filament ends causes additional wavy features in the filament diameter data curve.

Shear viscosity was measured using an Anton Paar rheometer with a 17 mm profiled cup and bob (Couette - rotating cup) geometry at 20 °C. The shear rate was increased from 0.01 to 1000 s$^{-1}$ over 51 measurement points with 10 seconds allowed at the start of the test (low shear rate) reducing linearly to 5 seconds at the end of the test (higher shear rate). Viscosity-shear rate flow curves were produced for the thawed products at 20 °C.

The Trouton ratio was determined from the definition provided by Jones et al (Rheologica Acta, 26, 20-30 (1987)), the Trouton ratio ($T_R$) as the ratio between shear ($\eta$) and extensional viscosity ($\eta_E$) using the following equation, where $\varepsilon$ is the strain rate:

$$T_R(\dot{\varepsilon}) = \frac{\eta_E(\dot{\varepsilon})}{\eta(\sqrt{3}\dot{\varepsilon})}$$

A high $T_R$ indicates a material with a high extensional viscosity or "stretchy" rheology. A material with a high extensional viscosity or "stretchy" rheology can also have a lower $T_R$ when the shear viscosity of the material is high. It is the maintenance of this "stretchy" rheology in the frozen beverage of the invention which is believed to be important for the desired sensory benefits. For the calculation of the Trouton ratio, the highest stable (plateau) value of the extensional viscosity was used, taken from a plot of apparent viscosity versus strain rate, and the corresponding strain rate was recorded for later use to determine the corresponding shear viscosity value (for example a strain rate of 100 $s^{-1}$ corresponds to a shear rate of 100*1.73 = 173 $s^{-1}$).

0.2 % w/w aqueous solutions of the above-mentioned compounds/extracts were prepared and the Trouton ratio determined as described above.

Results

The extensional shear viscosities of 0.2 % w/w solutions of OSA starch, gum Arabic, SSPS, sodium carboxy M cellulose, xanthan gum and a range of commercially available pectins and other biopolymers could not be measured with the equipment available due to very short filament lifetime. In order to obtain a Trouton ratio for these compounds more concentrated solutions were prepared until a reliable measurement could be made. It is assumed that the Trouton ratio of 0.2 % w/w aqueous solutions of these compounds will be lower or at most equal to the Trouton ratio obtained at higher concentrations. The results are summarised in Table 1.

Table 1: Trouton ratio of various compounds/extracts as aqueous solutions at various % concentrations.

|  | Concentration (% w/w) | Trouton ratio |
|---|---|---|
| OSA starch | 20 | 13.9 |
| Gum Arabic | 20 | 4.9 |
| SSPS | 20 | 8.1 |
| Sugar beet pectin | 4 | 3.6 |
| Sodium alginate | 2 | 35.0 |
| Sodium carboxymethyl cellulose | 2 | 3.9 |
| HM citrus pectin | 2 | 31.2 |
| Citrus pectin A | 2 | 3.0 |
| Citrus pectin B | 2 | 3.0 |
| Apple pectin | 2 | 3.0 |
| Sodium Carboxy M Cellulose | 1 | 58.5 |
| Xanthan gum | 1 | 12.7 |
| Locust bean gum | 1 | 29.5 |
| Guar gum | 1 | 13.3 |
| k-Carrageenan | 1 | 29.8 |
| Tara gum | 1 | 5.2 |
| Okra pectin | 0.2 | 1823.1 |
| Jews Mallow pectin | 0.2 | 623.0 |
| Lime flower pectin | 0.2 | 403.8 |
| Yellow mustard gum | 0.2 | 236 |
| Flax seed gum | 0.2 | 88 |

(continued)

|  | Concentration (% w/w) | Trouton ratio |
|---|---|---|
| Prickly pear cactus (juice)[1] | 0.2 | 1569 |
| Mekabu (aqueous extract)[2] | 0.2 | 660 |

[1] Obtained by squeezing pulp through muslin.
[2] Dried Mekabu was extracted by soaking in water (20 g in 100 ml) for 24 hours and squeezing through muslin.

Conclusions

The Trouton ratios of 0.2 % w/w aqueous solutions of okra pectin, Jews mallow pectin, lime flower pectin, yellow mustard gum and flax seed gum, prickly pear cactus (aqueous extract) and Mekabu (aqueous extract) were found to be at least 75. The Trouton ratios of okra pectin, Jews mallow pectin, lime flower pectin, yellow mustard gum, prickly pear cactus (aqueous extract) and Mekabu (aqueous extract) are clearly far above those of other commonly used plant extracts used in foods.

**Example 2: Preparation of frozen beverage comprising okra pectin**

Materials (additional)
Dextrose monohydrate (Cargill Incorporated)
LF9 corn syrup 63 DE (Cargill Incorporated)
Peach flavour (Symrise A/G)

Methods

Organoleptic sensory testing

A team tasting session was conducted using 6 people to assess a number of product attributes using a structured questionnaire. Each attribute was recorded on a vertical line from -5 (less of attribute) to +5 (more of attribute) with the internal reference (Control E) pre-scored at 0. The following attributes were scored in sequential order:

(a) "Suckability" which is the degree to which the product can be initially sucked up a 9 x 136 mm straw;
(b) "Amount of ice crystals" which is the overall amount of ice crystals (regardless of size) that can be detected in the mouth as product enters the mouth;
(c) "Ice crystal size" which is an overall immediate assessment of the degree to which the ice crystals generally feel small or larger in the mouth, detected either between tongue and palate or between teeth;
(d) "Initial smoothness" which is an immediate assessment of the degree to which the overall product feels silky/smooth in the mouth;
(e) "Coldness" which is an assessment of the degree to which the overall product feels cold in the mouth after moving the product inside the mouth; and
(f) "Final smoothness" which is an assessment of the degree to which the melted product feels smooth and silky in the mouth after moving the product around inside of the mouth until it is melted.

The following attributes were assessed following swallowing:

(a) "Mouth-coating" which is the amount of residue left around the inside of the mouth after the sample has been swallowed; and
(b) "Overall flavour" which is the intensity of the overall flavour of the product.

The panellists were able to report any other remarks about the products at the end of the questionnaire. The mean score differences from the control were plotted for each test product.

Preparation of flavour mixture

The flavour mixture was prepared in an ice-cream pilot plant the day before processing. The dry ingredients were blended then hydrated in water at 85 degrees centigrade in a high shear mixing tank for approximately 30 minutes. The solution was passed through a homogeniser set at 0 bar pressure and the mixture stored at 5 degrees centigrade until required. The flavour mixture formulation is summarized in Table 2.

Table 2: Flavour mixture formulation.

| Ingredient | % w/w |
|---|---|
| Dextrose monohydrate | 23.080 |
| Citric acid | 0.056 |
| Water | 60.291 |
| LF9 Corn syrup 63 DE | 16.150 |
| Xanthan gum | 0.256 |
| Peach flavour | 0.167 |
| Total | 100.00 |

Preparation of okra pectin concentrate

Okra pectin concentrates was prepared the day before processing in accordance with the following steps:

1. A corn syrup solution was prepared by dissolving the corn syrup and a third of the water (boiling temperature) using a magnetic stirrer.
2. A dry mixture of okra pectin and dextrose monohydrate was prepared.
3. An okra pectin solution was prepared by adding a third of the water (at room temperature) to the okra pectin/dextrose monohydrate mixture to form a homogeneous paste.
4. The remaining third of the water (boiling temperature) was then added to the okra pectin solution.
5. The okra pectin solution was then added to the corn syrup solution.
6. A few drops of beetroot red colouring was added and the okra pectin concentrate stirred at room temperature for 1 hour
7. The concentrate was stored at 5 ± 3 degrees centigrade until required for use.

The okra pectin concentrate formulation at 0.2 % w/w is summarized in Table 3. Two further concentrates were prepared at 0.4 and 0.6 % w/w okra pectin by adjusting the levels of okra pectin and compensating with the lower levels of water.

Table 3: Okra pectin concentrate formulation.

| Ingredient | % w/w |
|---|---|
| Okra pectin | 0.2 |
| Dextrose monohydrate | 23.08 |
| LF9 Corn syrup 63 DE | 16.15 |
| Water | 60.57 |
| Total | 100 |

Preparation of sugar concentrate

A sugar concentrate was prepared the day before processing in accordance with the following steps:

1. The corn syrup was dissolved in boiling water.
2. The dextrose monohydrate was then added to corn syrup solution and a few drops of beetroot red food colouring added.
3. The solution was stored at 5 ± 3 degrees centigrade until required for use.

The sugar concentrate formulation is summarized in Table 4.

Table 4: Sugar concentrate formulation.

| Ingredient | % w/w |
|---|---|
| Dextrose monohydrate | 23.08 |
| LF9 Corn syrup 63 DE | 16.15 |
| Water | 60.77 |
| Total | 100 |

Preparation of frozen beverage

The flavour mixture was pumped through a Hoyer KF 1000 Titanic ice-cream freezer with a dasher speed of 240 rpm and a barrel pressure of 3.0 bar. The extrusion temperature was adjusted to approximately -7 degrees centigrade. The overrun was determined as 15 % using an overrun cup and density of 1.1558 g/ml. Ice was introduced from a Ziegra UBE 1500 ice machine run at 50 Hz to the frozen flavour mixture and the combination passed through a crushing pump set at a gap of 1.25 mm. The amount of ice added was such that the final concentration of ice from the ice machine was 30 % w/w.

Four frozen beverages were prepared. The control (Control E) was prepared by adding 100 g of the sugar concentrate to 900 g of the flavour mixture and ice combination and stirring with a spoon for approximately 30 seconds until the red food colouring was homogeneously dispersed. The combined product was then placed in a blast freezer at -30 degrees centigrade to harden (approximately 1-2 hours) and stored at -25 degrees centigrade until required for use. Three okra pectin containing frozen beverages were prepared comprising 0.02, 0.04 and 0.06 % w/w okra pectin (Okra F, G and H respectively) were prepared in the same manner as for Control E but substituting the sugar concentrate for each of 0.2, 0.4 and 0.6 % w/w okra pectin concentrates.

The formulations of the frozen beverages are summarized in Table 5.

Table 5: Formulations for control and okra pectin frozen beverages ([1] 1.5 mm in diameter; [2] including approximately 18 % w/w nominal ice content calculated at - 7°C by calculation using the freezing curve for sucrose solutions as described for example on pages 28-29 of "The Science of Ice Cream", C. Clarke, RSC, Cambridge, UK, 2004).

| Ingredient | Control E (% w/w) | Okra F (% w/w) | Okra G (% w/w) | Okra H (% w/w) |
|---|---|---|---|---|
| Dextrose monohydrate | 16.155 | 16.155 | 16.155 | 16.155 |
| Citric acid | 0.033 | 0.033 | 0.033 | 0.033 |
| LF9 Corn syrup 63 DE | 11.304 | 11.304 | 11.304 | 11.304 |
| Xanthan gum | 0.154 | 0.154 | 0.154 | 0.154 |
| Peach flavour | 0.10 | 0.10 | 0.10 | 0.10 |
| Okra pectin | 0 | 0.02 | 0.04 | 0.06 |
| Ice (1.25 mm) | 30.0 | 30.0 | 30.0 | 30.0 |
| Water (inc. approx 18% ice) | 42.248 | 42.228 | 42.208 | 42.188 |
| Total | 100 | 100 | 100 | 100 |

After storage at -7 degrees centigrade overnight, all four frozen beverages were thawed and the resulting solutions characterised for extensional viscosity at 20 degrees centigrade in accordance with the protocol set forth in Example 1.

Results

The results summarised in Table 6 show that post-addition of okra pectin in all three frozen beverages produced frozen beverages with elevated extensional viscosities compared to a control product without okra pectin.

Table 6: Extensional viscosities (Pa.s) at 20 degrees centigrade of a control and okra pectin containing frozen beverages after storage at -7 degrees centigrade overnight produced on commercial scale equipment wherein the okra pectin is added after a crushing pump stage (n.d = not detectable; n = 4; errors calculated at 95 % confidence limits.

| Frozen beverage | Extensional viscosity (Pa.s) |
|---|---|
| Control E | 0.248 ± 0.014 |
| Okra F | 3.818 ± 0.373 |
| Okra G | 7.973 ± 0.553 |
| Okra H | 12.600 ± 0.182 |

Figure 1 shows the results of organoleptic testing carried out on the four frozen beverages after overnight storage at -7 degrees centigrade using a panel of 6 persons. The results show a benefit of 0.06 % w/w okra pectin (Okra H) addition for increased smoothness, reduced coldness, increased final smoothness and increased mouth-feel compared to a control without okra (Control E).

Conclusion

Post-addition of okra pectin to a frozen beverage provides a product with a smoother initial and final texture and a warmer drinking product with an increased mouth-feel compared to a control without okra pectin. At 0.02 % w/w okra pectin there is a sensorial effect but the effect is further enhanced at 0.06 % w/w in the final product.

**Example 3: Effect of varying ice crystal size and levels of added ice in a frozen beverage comprising okra pectin**

Preparation of frozen beverages

The flavour mixture, sugar and okra pectin concentrates described in Example 2, prepared the day before being processed into frozen beverages, were the basis for the preparation of further frozen beverages using commercial scale equipment as described in Example 2 wherein the ice particle diameter produced by the crushing pump was changed to 1.5 and 2.5 mm by adjusting the crushing pump gap, and the amount of ice produced by the Ziegler UBE 1500 ice machine was 40 and 42 % w/w for respectively the frozen beverages with 1.5 and 2.5 mm ice particle diameter.
Frozen beverages were prepared with and without 0.06 % w/w okra pectin, thus the nomenclature used for the 1.5 mm ice particle diameter containing frozen beverages with and without okra pectin are Control I and Okra J, and for the 2.5 mm ice particle diameter containing frozen beverages with and without okra pectin are Control K and Okra L.
The formulations of the frozen beverages are summarized in Table 7.

Table 7: Formulations for control and okra pectin frozen beverages ([1] 1.5 mm in diameter; [2] 2.5 mm in diameter; [3] including approximately 18 % w/w nominal ice content calculated at -7°C by calculation using the freezing curve for sucrose solutions as described for example on pages 28-29 of "The Science of Ice Cream", C. Clarke, RSC, Cambridge, UK, 2004).

| Ingredient | Control I (% w/w) | Okra J (% w/w) | Control K (% w/w) | Okra L (% w/w) |
|---|---|---|---|---|
| Dextrose monohydrate | 13.848 | 13.848 | 13.386 | 13.386 |
| Citric acid | 0.030 | 0.030 | 0.029 | 0.029 |
| LF9 Corn syrup 63 DE | 9.69 | 9.69 | 9.367 | 9.367 |
| Xanthan gum | 0.138 | 0.138 | 0.133 | 0.133 |
| Peach flavour | 0.09 | 0.09 | 0.087 | 0.087 |
| Okra pectin | 0 | 0.06 | 0 | 0.06 |
| Ice | 40.0[1] | 40.0[1] | 42.0[2] | 42.0[2] |
| Water (inc. approx 18% ice)[3] | 36.204 | 36.144 | 34.998 | 34.938 |
| Total | 100 | 100 | 100 | 100 |

After storage at -25 degrees centigrade overnight, all four frozen beverages were thawed and the resulting solutions characterised for extensional viscosity at 20 degrees centigrade in the manner described in Example 1.

Results

The results are summarised in Table 8 and reproduce the results described in Example 2 in that both frozen beverages comprising okra pectin had elevated extensional viscosities, in this case of approximately 140 Pa.s, thus exemplifying highly elastic behaviour, compared to the control products without okra pectin.

Table 8: Extensional viscosities (Pa.s) at 20 degrees centigrade of frozen beverages comprising 1.5 and 2.5 mm ice with and without okra pectin after storage at -25 degrees centigrade produced on commercial scale equipment wherein the okra pectin is added after a crushing pump stage (n.d = not detectable; n = 4; errors calculated at 95 % confidence limits).

| Frozen beverage | Extensional viscosity (Pa.s) |
| --- | --- |
| Control I | n.d |
| Okra J | 140.70 ± 10.40 |
| Control K | n.d |
| Okra L | 140.93 ± 31.39 |

Figures 2a and 2b show respectively the results of organoleptic testing carried out in accordance with the protocol described in Example 2 on the four frozen beverages after overnight storage at -7 degrees centigrade using a panel of 7 persons with 40 % w/w ice particles (1.5 mm ice particle diameter) and 42 % w/w ice particle (2.5 mm ice particle diameter). The results show a benefit at 0.06 % w/w okra pectin (Okra J and L) at different ice levels and different ice diameters for addition for increased smoothness, reduced coldness, increased final smoothness and increased mouth-feel compared to a control without okra (Control I and K).

Conclusions

The results show that addition of okra pectin to frozen beverages containing up to 42 % w/w ice particles of 1.5 or 2.5 mm improves sensory properties such as reduced coldness, increased smoothness and mouth-coating compared to a beverages without okra pectin.

**Example 4: Measurement of ice crystal size in the frozen beverages comprising okra pectin of Example 2**

Method

Optical microscopy

All sample preparation was carried out at -8 degrees centigrade. The frozen beverages were tempered at -8 degrees centigrade overnight. 50 ml of 20 % w/w aqueous ethanol solution was added to approximately 10 g of the frozen beverage. The sample was gently mixed until the matrix was dispersed and the ice particles separated from the diluted matrix phase by sieving and rinsing with 20 % w/w aqueous ethanol solution. The ice phase was transferred to a cooled glass petri dish and placed in a glass jacketed dish circulated with coolant at a temperature sufficient to maintain the sample in the petri dish at -8 degrees centigrade. The ice phase was then viewed using a Wild M8 macroscope with a Leica DFC 295 camera. Images were captured using the Leica application suite image capture software interfaced with the camera.

**Scanning electron microscopy (SEM)**

Stubs were pre-cooled to -7 °C. After mounting frozen beverage samples onto the stubs, they were immediately plunged into liquid nitrogen and then transferred to a Gatan Alto 2500 low temperature preparation chamber and the pressure reduced to $2 \times 10^{-5}$ mBar. The temperature was then increased to -90 °C and each of the slush samples fractured using a fine scalpel. Water is sublimed from the ice surface for 40 seconds to etch the surface in order to create surface topography specific to ice crystals. Then the temperature was reduced to -110 °C and sample sputter coated with 2 nm platinum.

The coated samples were then transferred to a Jeol 7600 field emission scanning electron microscope fitted with a Gatan cold stage and cooled to -130 °C and representative digital images recorded at x 50. Analysis of the images was conducted using Olympus SCANDIUM Soft Imaging Solutions GmbH v. 5.2 software. At least 200 ice crystals were manually segmented by defining ice matrix interfaces using closed polygon outlining software for aspect ratio and arbitrary line for maximum ice crystal length.

Results

Table 9 summarises the ice crystal measurements obtained by SEM from which it is clear that the number average lengths of the longest ice crystal dimension of the small ice formed in the ice cream freezer was approximately 100 $\mu$m. The frozen beverages also contained large ice particles which, using the optical microscopy protocol described, appeared to be around 1-3 mm for the ice which passes through the crushing pump (Example 1).

Table 9: Number average lengths of the longest ice crystal dimension of Control E (N = 466) and Okra H (N = 384).

| Frozen beverage | Average Ice particle size (longest length, $\mu$m) |
|---|---|
| Control E | 91 |
| Okra H | 103 |

Conclusions

The inclusion of okra pectin does not affect the size of the ice crystals formed in the frozen beverage. Thus any organoleptic differences between frozen beverages with and without okra pectin are due to the imparted high extensional viscosity.

**Example 5: Large scale preparation of frozen beverage comprising Jew's mallow (Corchorus olitorius) pectin**

Method

The flavour mixture was prepared as described in Example 2.

Preparation of Jew's mallow pectin concentrate

A Jew's mallow pectin concentrate as set forth in Table 10 was prepared the day before processing in accordance with the following steps:

1. The Jew's mallow pectin powder and dextrose monohydrate were combined and mixed to form a homogeneous dry mixture.

2. The corn syrup was weighed directly into a glass beaker containing a magnetic stirrer bar. Approximately 1/3 of the total volume of (boiling) water was added to the beaker whilst the solution was stirred using a magnetic stirrer.

3. Approximately 1/3 of the total volume of (boiling) water was added to the Jew's mallow pectin/dextrose monohydrate mixture and the mixture was stirred using a spatula to form a homogeneous paste. Another 1/3 of the total volume of (boiling) water was added and the mixture stirred. Potassium sorbate was added to the solution.

4. The solution was stirred at room temperature for 1 hour.

5. The solution was sieved through a metal kitchen sieve and the corn syrup solution was poured through the sieve to remove any remaining pectin solution.

6. A few drops of beetroot red colouring was added and the solution was stored at 5 $\pm$ 3 °C until required for use.

Table 10: Jew's mallow pectin concentrate formulation.

| Ingredient | % w/w |
|---|---|
| Jew's mallow pectin | 4.0 |
| Dextrose monohydrate | 23.08 |
| LF9 Corn syrup 63 DE | 16.15 |
| Potassuim sorbate | 0.2 |

(continued)

| Ingredient | % w/w |
|---|---|
| Water | 56.57 |
| Total | 100 |

Preparation of sugar concentrate

A sugar concentrate in accordance with the formulation set forth in Table 11 was prepared the day before processing in accordance with the following steps:

1. The corn syrup was dissolved in boiling water using a magnetic stirrer.
2. The dextrose monohydrate and potassium sorbate was then added to the corn syrup solution.
3. The solution was stirred at room temperature for 45 minutes.
4. The solution was adjusted to the desired weight using boiling water to compensate any loss of water via evaporation. A few drops of drops of beetroot red colouring was added and the solution was stored at 5 ± 3 °C until required.

Table 11: Sugar concentrate formulation.

| Ingredient | % w/w |
|---|---|
| Dextrose monohydrate | 23.08 |
| LF9 Corn syrup 63 DE | 16.15 |
| Potassium sorbate | 0.2 |
| Water | 60.57 |
| Total | 100 |

Preparation of frozen beverages

The flavour mixture was pumped through a Hoyer KF 1000 Titanic ice-cream freezer with a dasher speed of 240 rpm and a barrel pressure of 2.0 bar. The extrusion temperature was adjusted to approximately -9 degrees centigrade. The overrun was determined as 17 % using an overrun cup and density of 1.1317 g/ml. Ice was introduced from a Ziegra UBE 1500 ice machine run at 50 Hz to the frozen flavour mixture and the combination passed through a crushing pump set at a gap of 1.5 mm. The amount of ice added was such that the final concentration of ice from the ice machine was 30 % w/w.

Two frozen beverages were prepared. The control (M1) was prepared by adding 100 g of the sugar concentrate to 900 g of the flavour mixture and ice combination and stirring until the red colour was homogeneously dispersed, pouring into cups, blast freezing the combination at -30 degrees centigrade to harden (approximately 1-2 hours) and storing at -25 degrees centigrade until required for use. A Jew's mallow pectin sample (M2) containing frozen beverage was prepared comprising 0.4 % w/w Jew's mallow pectin in the same manner as for the control but substituting the sugar concentrate for 4% w/w Jew's mallow pectin concentrate. The final product formulations are provided in Table 12

Table 12: Formulations for control and Jew's mallow pectin frozen beverages ([1] 1.5 mm in diameter; [2] including approximately 18 % w/w nominal ice content calculated at -7°C by calculation using the freezing curve for sucrose solutions as described for example on pages 28-29 of "The Science of Ice Cream", C. Clarke, RSC, Cambridge, UK, 2004).

| Ingredient | M1 (%w/w) | M2 (% w/w) |
|---|---|---|
| Dextrose monohydrate | 16.156 | 16.156 |
| Citric acid | 0.035 | 0.035 |
| LF9 Corn syrup 63 DE | 11.305 | 11.305 |
| Xanthan gum | 0.161 | 0.161 |
| Peach flavour | 0.105 | 0.105 |
| Jew's mallow pectin | 0 | 0.4 |

(continued)

| Ingredient | M1 (%w/w) | M2 (% w/w) |
|---|---|---|
| Potassium sorbate | 0.014 | 0.014 |
| Ice[1] | 30.0 | 30.0 |
| Water[2] | 42.224 | 41.824 |
| Total | 100 | 100 |

Following storage at -7 degrees centigrade overnight, the frozen beverages were thawed and the resulting solutions characterised for extensional viscosity at 20 degrees centigrade according to the methods of Example 2.

Results

The results, which are summarized in Table 13, show that post-addition of Jew's mallow pectin to a frozen beverage provides an extensional viscosity of above 20 Pa.s (highly elastic).

Table 13: Extensional viscosities (Pa.s) of frozen beverages at 20 degrees centigrade with and without Jew's mallow pectin following storage at -7 degrees centigrade overnight. Standard deviations are given at 95 % confidence limits for n = 3 (n.d = not detectable).

| Frozen beverage | M1 | M2 |
|---|---|---|
| Concentration of Jew's Mallow pectin (% w/w) | 0 | 0.4 |
| Extensional viscosity (Pa.s) | n.d | 21.33 $\pm$ 3.39 |

The results from the organoleptic sensory testing (n = 8) are shown in Figure 3. For the frozen beverage containing Jew's mallow pectin, it can be seen that there was increased smoothness, reduced coldness, increased final smoothness and increased mouth-feel relative to the control without Jew's mallow pectin.

Conclusion

Post-addition of Jew's mallow pectin to a frozen beverage provides a warmer drinking and smoother product with increased mouth-coating properties compared to a control without Jew's mallow pectin.

**Claims**

1.  A frozen beverage comprising:

    (a) 35 to 90, preferably 50-90 % w/w water;
    (b) 5 to 45, preferably 10 to 30 % w/w freezing point depressant;
    (c) 5 to 50, preferably 25 to 40 % w/w a first ice crystal population;
    (d) 0.001 to 10, preferably 0.01 to 5, most preferably 0.01 to 3 % w/w an ingredient having a Trouton ratio of at least 75, preferably at least 200, most preferably at least 500, as measured in a 0.2 wt. % aqueous solution at 20 degrees centigrade;

    wherein the number average length of the longest dimension of the first ice crystal population is 500 to 5000, preferably 500 to 3500, most preferably 500 to 3000 $\mu$m; and
    wherein the extensional viscosity of a degassed melt of the frozen beverage is at least 12, more preferably at least 20 Pa.s higher at 20 degrees centigrade than a degassed melt of an identical frozen beverage but without technical feature (d).

2.  A frozen beverage according to claim 1 wherein the freezing point depressant is selected from the group consisting of monosaccharides, disaccharides, starch hydrolysates, maltodextrins, soluble fibre, polyols and mixtures thereof.

3.  A frozen beverage according to any one of the preceding claims wherein the ingredient is selected from the group consisting of okra pectin, Jews mallow pectin, lime flower pectin, yellow mustard gum, flax seed gum, water-soluble extract of prickly pear cactus (Opuntia ficus-indica), water-soluble extract of Mekabu or any combination thereof and more preferably comprises okra pectin or Jews Mallow pectin or water-soluble extract of prickly pear cactus (Opuntia ficus-indica) or water-soluble extract of Mekabu or a combination thereof.

4. A frozen beverage according to any one of the preceding claims wherein the frozen beverage additionally comprises a second ice crystal population, wherein the number average length of the longest dimension of the ice crystal population is 50 to 150, preferably 60 to 135, most preferably 75 to 125 $\mu$m, and wherein the number average length of the longest dimension of all ice crystal populations is greater than 100 $\mu$m.

5. A frozen beverage according to claim 4 wherein the weight ratio of the first ice crystal population to the second ice crystal population is at least 1:1, preferably 1:1 to 1:5.

6. A frozen beverage according to any one of the preceding claims wherein the frozen confection comprises 0 to 0.05, preferably 0 to 0.01, most preferably 0 % w/w fat.

7. A frozen beverage according to any one of the preceding claims wherein the frozen confection comprises 0 to 0.05, preferably 0 to 0.01, most preferably 0 % w/w protein.

8. A frozen beverage according to any one of the preceding claims wherein the frozen confection additionally includes a thickener, preferably selected from the group consisting of xanthan, guar gum, locust bean gum, carrageenan, and pectins having a Trouton ratio below 75, as measured in a 0.2 wt. % solution of said pectin in water as measured at 20 degrees centigrade.

9. A frozen beverage according to any one of the preceding claims wherein the frozen confection additionally comprises a flavouring.

10. A frozen beverage according to any one of the preceding claims wherein the frozen confection has an over run of 10 to 50, preferably 10 to 30 %.

11. A frozen beverage according to any one of the preceding claims wherein the frozen confection has a pH of 2.5 to 8, preferably 3 to 7.5, most preferably 3 to 5.

**Patentansprüche**

1. Gefrorenes Getränk, umfassend:

(a) 35 bis 90, vorzugsweise 50 - 90 Gew.-% Wasser,
(b) 5 bis 45, vorzugsweise 10 bis 30 Gew.-% Gefrierpunkterniedriger,
(c) 5 bis 50, vorzugsweise 25 bis 40 Gew.-% einer ersten Eiskristallpopulation,
(d) 0,001 bis 10, vorzugsweise 0,01 bis 5, höchst bevorzugt 0,01 bis 3 Gew.-% einer Zutat, die ein Trouton-Verhältnis von mindestens 75, vorzugsweise mindestens 200, höchst bevorzugt mindestens 500, gemessen in einer 0,2 gew.-%-igen wässrigen Lösung bei 20 Grad Celsius, aufweist,

wobei die zahlenmittlere Länge der längsten Dimension der ersten Eiskristallpopulation 500 bis 5000, vorzugsweise 500 bis 3500, höchst bevorzugt 500 bis 3000 $\mu$m beträgt und
wobei die Dehnviskosität einer entgasten Schmelze des gefrorenen Getränks bei 20 Grad Celsius mindestens 12, bevorzugter mindestens 20 Pa.s höher als die einer entgasten Schmelze eines identischen gefrorenen Getränks ist, jedoch ohne das technische Merkmal (d).

2. Gefrorenes Getränk nach Anspruch 1, wobei der Gefrierpunkterniedriger aus der Gruppe, die aus Monosacchariden, Disacchariden, Stärkehydrolysaten, Maltodextrinen, löslicher Faser, Polyolen und Mischungen davon besteht, ausgewählt ist.

3. Gefrorenes Getränk nach irgendeinem der vorhergehenden Ansprüche, wobei die Zutat aus der Gruppe ausgewählt ist, die besteht aus Okra-Pektin, Judenmalve-Pektin, Limettenblüten-Pektin, Gummi vom Gelben Senf, Leinsamengummi, wasserlöslichem Extrakt vom Feigenkaktus (*Opuntia ficus-indica*), wasserlöslichem Extrakt von Mekabu oder einer beliebigen Kombination davon und bevorzugter umfasst Okra-Pektin oder Judenmalven-Pektin oder wasserlöslichen Extrakt vom Feigen-Kaktus (*Opuntia ficus-indica*) oder wasserlöslichen Extrakt von Mekabu oder eine Kombination davon.

4. Gefrorenes Getränk nach irgendeinem der vorhergehenden Ansprüche, wobei das gefrorene Getränk zusätzlich eine zweite Eiskristallpopulation umfasst, wobei die zahlenmittlere Länge der längsten Dimension der Eiskristallpopulation 50 bis 150, vorzugsweise 60 bis 135, höchst bevorzugt 75 bis 125 $\mu$m beträgt und wobei die zahlenmittlere Länge der längsten Dimension aller Eiskristallpopulationen größer als 100 $\mu$m ist.

5. Gefrorenes Getränk nach Anspruch 4, wobei das Gewichtsverhältnis der ersten Eiskristallpopulation zu der zweiten Eiskristallpopulation mindestens 1:1, vorzugsweise 1:1 bis 1:5 beträgt.

6. Gefrorenes Getränk nach irgendeinem der vorhergehenden Ansprüche, wobei das gefrorene Konfekt 0 bis 0,05, vorzugsweise 0 bis 0,01, höchst bevorzugt 0 Gew.-% Fett umfasst.

7. Gefrorenes Getränk nach irgendeinem der vorhergehenden Ansprüche, wobei das gefrorene Konfekt 0 bis 0,05, vorzugsweise 0 bis 0,01, höchst bevorzugt 0 Gew.-% Protein umfasst.

8. Gefrorenes Getränk nach irgendeinem der vorhergehenden Ansprüche, wobei das gefrorene Konfekt zusätzlich ein Verdickungsmittel enthält, das vorzugsweise aus der Gruppe ausgewählt ist, die aus Xanthan, Guargummi, Johannisbrotgummi, Karrageen und Pektinen mit einem Trouton-Verhältnis unter 75, gemessen in einer 0,2 gew.-%-igen Lösung des Pektins in Wasser, gemessen bei 20 Grad Celsius, besteht.

9. Gefrorenes Getränk nach irgendeinem der vorhergehenden Ansprüche, wobei das gefrorene Konfekt zusätzlich einen Geschmacksstoff umfasst.

10. Gefrorenes Getränk nach irgendeinem der vorhergehenden Ansprüche, wobei das gefrorene Konfekt einen Überlauf von 10 bis 50, vorzugsweise von 10 bis 30%, aufweist.

11. Gefrorenes Getränk nach irgendeinem der vorhergehenden Ansprüche, wobei das gefrorene Konfekt einen pH von 2,5 bis 8, vorzugsweise von 3 bis 7,5, höchst bevorzugt von 3 bis 5, aufweist.

## Revendications

1. Boisson congelée comprenant :

   (a) de 35 à 90, de préférence 50-90 % en masse/masse d'eau ;
   (b) de 5 à 45, de préférence de 10 à 30 % en masse/masse d'abaisseur de point de congélation ;
   (c) de 5 à 50, de préférence de 25 à 40 % en masse/masse d'une première population de cristal de glace ;
   (d) de 0,001 à 10, de préférence de 0,01 à 5, encore mieux de 0,01 à 3 % en masse/masse d'un ingrédient ayant un rapport Trouton d'au moins 75, de préférence d'au moins 200, encore mieux d'au moins 500, comme mesuré dans une solution aqueuse à 0,2 % en masse à 20 degrés centigrade ;

   dans laquelle la longueur moyenne en nombre de la dimension la plus longue de la première population de cristal de glace est de 500 à 5 000, de préférence de 500 à 3 500, encore mieux de 500 à 3 000 $\mu$m ; et
   dans laquelle la viscosité élongationnelle d'une masse en fusion dégazée de la boisson congelée est d'au moins 12, encore mieux d'au moins 20 Pa.s supérieure à 20 degrés centigrade qu'une masse en fusion dégazée d'une boisson congelée identique mais sans l'aspect technique (d).

2. Boisson congelée selon la revendication 1, dans laquelle l'abaisseur de point de congélation est choisi dans le groupe constitué de monosaccharides, disaccharides, hydrolysats d'amidon, maltodextrines, fibre soluble, polyols et mélanges de ceux-ci.

3. Boisson congelée selon l'une quelconque des revendications précédentes, dans laquelle l'ingrédient est choisi dans le groupe consistant en pectine de gombo, pectine de mauve des juifs, pectine de fleur de citron vert, gomme de moutarde jaune, gomme de semence de lin, extrait soluble dans l'eau de figue de barbarie (Opuntia ficus-indica), extrait soluble dans l'eau de Mekabu ou une combinaison quelconque de ceux-ci et comprend encore mieux de la pectine de gombo ou de la pectine de mauve des juifs ou un extrait soluble dans l'eau de figue de barbarie (Opuntia ficus-indica) ou un extrait soluble dans l'eau de Mekabu ou une combinaison de ceux-ci.

4. Boisson congelée selon l'une quelconque des revendications précédentes, dans laquelle la boisson congelée comprend de plus une seconde population de cristal de glace, dans laquelle la longueur moyenne en nombre de la dimension la plus longue de la population de cristal de glace est de 50 à 150, de préférence de 60 à 135, encore mieux de 75 à 125 $\mu$m, et dans laquelle la longueur moyenne en nombre de la dimension la plus longue de toutes les populations de cristal de glace est supérieure à 100 $\mu$m.

5. Boisson congelée selon la revendication 4, dans laquelle le rapport en masse de la première population de cristal de glace à la seconde population de cristal de glace est d'au moins 1:1, de préférence de 1:1 à 1:5.

6. Boisson congelée selon l'une quelconque des revendications précédentes, dans laquelle la confiserie congelée comprend de 0 à 0,05, de préférence de 0 à 0,01, encore mieux 0 % en masse/masse de graisse.

7. Boisson congelée selon l'une quelconque des revendications précédentes, dans laquelle la confiserie congelée comprend de 0 à 0,05, de préférence de 0 à 0,01, encore mieux 0 % en masse/masse de protéine.

8. Boisson congelée selon l'une quelconque des revendications précédentes, dans laquelle la confiserie congelée comprend de plus un épaississant, choisi de préférence dans le groupe consistant en xanthane, gomme guar, gomme de caroube, carraghénane, et pectines ayant un rapport Trouton inférieur à 75, comme mesuré dans une solution à 0,2 % en masse de ladite pectine dans de l'eau comme mesuré à 20 degrés centigrade.

9. Boisson congelée selon l'une quelconque des revendications précédentes, dans laquelle la confiserie congelée comprend de plus un arôme.

10. Boisson congelée selon l'une quelconque des revendications précédentes, dans laquelle la confiserie congelée présente un dépassement de 10 à 50, de préférence de 10 à 30 %.

11. Boisson congelée selon l'une quelconque des revendications précédentes, dans laquelle la confiserie congelée présente un pH de 2,5 à 8, de préférence de 3 à 7,5, encore mieux de 3 à 5.

Figure 1

Figure 2a

Figure 2b

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4737372 A
- EP 1051913 B1
- US 3826829 A
- WO 2010054829 A1
- WO 2010057024 A1
- CN 102058124 A, Pengxiang Li
- CN 1023006578 A, Xiong Wang
- JP 2008099656 A, Kuzuu Miki

**Non-patent literature cited in the description**

- **ROMANCHIK-CERPOVICZ et al.** *J. of the Am. Dietetic Assoc.,* 2006, 594-597
- **JONES et al.** *Rheologica Acta,* 1987, vol. 26, 20-30